# EUROPEAN PATENT APPLICATION

(11) **EP 0 861 782 A1**
(43) Date of publication of application: **02.09.1998**
(21) Application number: 98301314.5
(22) Date of filing: 23.02.1998
(51) Int. Cl.: B64D 17/14

(54) **Parachutes**

(30) Priority: 01.03.1997 GB 9704277
(71) Applicant: Wardle Storeys (Safety and Survival Equipment) Limited, Colne, Lancashire BB8 6UT (GB)
(72) Inventor: Parker, Nigel Stuart, Llantwit Major, South Glamorgan CF61 2SA (GB); Hirst, David Richard Jordan, Bridgend, Mid Glamorgan, CF35 5EL (GB)
(74) Representative: Knott, Stephen Gilbert

(57) **Abstract**

A parachute has a canopy (10) provided with air outlets (19) on an upper portion of the canopy. When the canopy (10) is inflated air passes out of the outlets (19) and the outlets (19) are so positioned that by selectively closing the outlets (19) the parachute can be steered. In an alternative mode of use, the outlets (19) remain permanently open thus allowing unsteered operation of the parachute. The canopy (10) is made of air impermeable material to maximize air flow through the outlets (19).

## Description

The invention relates to parachutes and in particular to parachutes with a conical canopy.

Applied to parachutes, the term "conical" does not mean shaped like a cone; it means that the canopy is generally circular in cross-sections normal to the axis of the canopy. There are a wide variety of shapes of canopy that meet the general criterion of being "conical" and many of these are broadly hemispherical.

Parachutes are used for supporting loads in controlled descent through the air and are known in a variety of configurations. However, parachutes with conical canopies have found wide application particularly for dropping military personnel from aircraft. Such parachutes are comparatively inexpensive to manufacture, give reliable opening and can be used by personnel with the minimum of training. In general, the drive of the parachute cannot be controlled (e.g. to steer the parachute) because this requires significant training and experience and the use of controllable parachutes where a number of persons are dropped together can lead to collisions which are plainly dangerous. Where controllable parachutes are required, aerofoil designs are often chosen. This means that, to meet the requirement for controllable and non-controllable parachutes, two different designs of parachute are required.

According to the invention, there is provided a parachute comprising a conical canopy including at least two outlets for permitting the egress of air from the interior of the canopy to the exterior when the canopy is inflated, the outlets being separately selectively closable to at least reduce the flow of air therethrough and the outlets being so positioned on the canopy that such closing of an outlet produces a driving force on the canopy from the other outlet or outlets to control the drive of the canopy.

Thus, a conical parachute is provided which can be used by lesser trained persons without closing the outlets to control the drive of the parachute and by more highly trained persons to open and close the outlets to perform such control. The presence of the outlets also provides a parachute with good stability and descent characteristics.

The following is a more detailed description of an embodiment of the invention, by way of example, reference being made to the accompanying drawings in which:-
Figure 1 is a side elevation of a deployed parachute having a conical canopy and twelve outlets,
Figure 2 is a similar view to Figure 1 but showing a portion of the canopy of the parachute of Figure 1 in greater detail, and
Figures 4 to 7 are each a plan view from above of the parachute of Figures 1 and 2 showing the outlets opened and closed in various different configurations to provide different directions of steering.

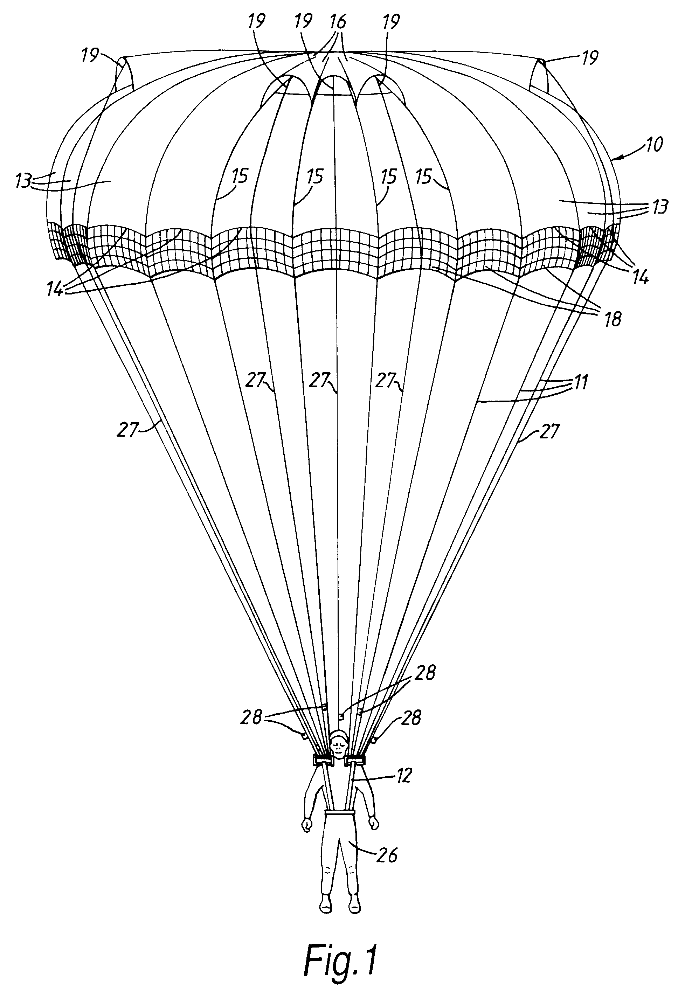

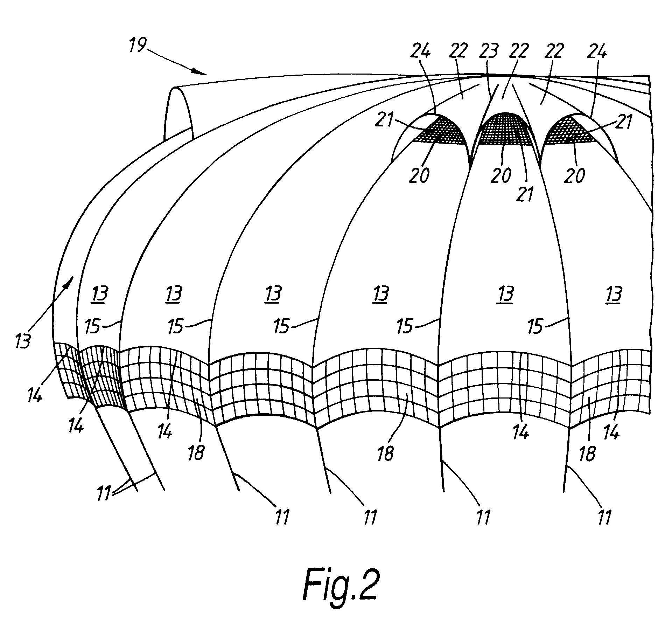

Referring first to Figures 1 and 2, the parachute comprises a canopy 10 connected by rigging lines 11 to a harness indicated schematically at 12 in Figure 1. The harness 12 is for holding a person.

The drawings show the canopy 10 in an inflated disposition. It will be appreciated that, prior to use, the canopy 10 and rigging lines 11 and harness 12 will be packed in a bag in conventional fashion and deployed for use in conventional fashion.

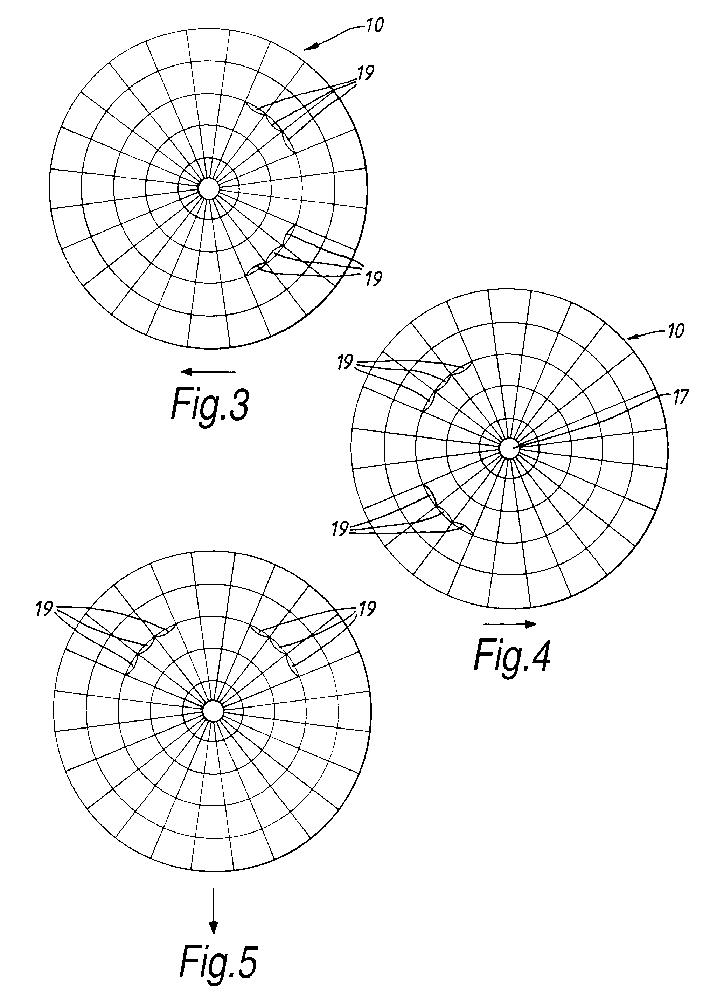

The canopy 10 is formed by twenty-four gores 13. Each gore 13 is formed from an air impermeable material and is generally triangular in shape with a base edge 14, two side edges 15 and an apex 16. The gores 13 are connected together along their side edges 15 to form the canopy 10 with the base edges 14 forming a lower edge of the canopy and the apexes 16 of the gores 13 forming an apex of the canopy 10. As seen in Figures 3 to 7, the apex 16 of each gore 13 is slightly truncated to form a hole 17 at the apex of the canopy 10.

Of course, there may be more or less than twenty-four gores 13 as required.

Rigging lines 11 extend to the harness 12 from the lower edge of the canopy at respective lower ends of a join between two adjacent side edges 15. In addition, anti-inversion netting 18 extends around the lower edge of the canopy 10.

The gores 13 are shaped so that the canopy 10, when inflated, is not truly hemispherical but is shaped as a flattened hemisphere with the axial depth of the canopy 10 from the apex to a point level with the lower edge of the canopy is less than half the diameter of the canopy 10 at the lower edge. In addition, the diameter of the canopy 10 adjacent the lower edge is generally constant and then decreases sharply towards the apex. This means that the portion of the canopy 10 adjacent the apex is almost conical with a cone angle which may be between 30-50° from the horizontal.

Twelve of the twenty-four gores 13 are provided with outlets indicated generally at 19. The outlets 19 are arranged in four groups of three outlets 19 with the groups being equi-angularly spaced around the canopy 10, as best seen in Figures 3 to 7. This means that, as viewed in plan, there is an angle of 90° between the bisector of the apex angle of the middle gore 13 of each group and the corresponding bisector of the next group. In addition, the harness 12 is arranged so that a person 26 in the harness 12 faces in a direction lying in a plane which includes the canopy axis and which bisects the gores along a line which, as viewed in plan as seen in Figures 3 to 7, bisects the angle between two adjacent pairs of bisectors. Thus, two groups of outlets 19 face generally forwards at an angle of 45° to the direction of travel of a person 26 using the parachute and two groups of outlets 19 face rearwardly at respective angles of 135° relative to the direction of travel of a person 26 using the canopy 10.

In Figures 3 to 7, the gores are numbered one to twenty-four and this means that the person using the canopy 10 faces in a direction which is the bisector of the apex angle of the gore 13 with the four groups of outlets 19 being provided in gores 3,4 and 5, gores 9,10 and 11, gores 15,16 and 17 and gores 21,22 and 23.

Each outlet 19 includes an aperture 20 formed by cutting away the associated gore 13 from the apex 16 to a point about halfway between the apex 16 and the base edge 14 (see Figures 2 to 7). A mesh 21 extends across this aperture 20.

A generally triangular panel 22 overlies each aperture 20 and has side edges 23 connected along the side edges 15 of the adjacent gores 13. Each panel 22 is wider than the associated gore 13 so that, at the lower end, each panel 22 has an edge 24 which, when the canopy 10 is inflated, forms a hooped exit. The area of this exit is less than the area of the aperture 20 to ensure that air can flow only from the interior of the canopy 10 to the exterior.

A line 27 extends from the lower edge 24 of each panel 22 to a point on the harness 12, where the end of each line carries an identifier 28 that indicates the outlet 19 to which that line relates. Thus, by pulling a particular line 27, the associated outlet 19 can be wholly or partially closed by drawing the edge 24 of the panel 22 towards the cutaway upper edge of the associated gore 13.

Since the upper portion is almost conical in shape when inflated with a cone angle between 30-50° from the horizontal, the exits to the apertures 20 face almost horizontally in a direction which, in this embodiment, lies in a plane including the canopy axis.

In use, the parachute described above with reference to the drawings, is deployed conventionally. Air enters the canopy to inflate the canopy to the shape shown in Figures 1 and 2. This shape minimizes the entrapped volume of air which allows rapid inflation and this is particularly useful when the parachute is deployed at low levels. It also provides reduction in the randomness of opening, providing a smooth predictable and comfortable opening. An effect of this is to reduce post-inflation collapse caused by wake re-attachment following opening.

The shape of the parachute also optimizes the lateral manoeuvrability of the parachute by maximizing the lift drag ratio in the drive configuration. It also derives lift normal to the direction of travel. This lift forces the periphery of the parachute to fly full, thus maximizing drag for a given parachute constructed area.

The shape also tends to shrug off any line-over should this occur.

The netting 18 also prevents line-over malfunctions.

In unsteered use, the parachute otherwise acts as a normal conical parachute. The presence of the outlets 19 allows the canopy to be formed from air impermeable material, as described above.

However, the parachute can also be steered by operation of the lines attached to the panels 22. This will now be described in more detail with reference to Figures 2 to 7. In considering these figures it must be borne in mind that, as described above, the user of the parachute faces along the line between panels 11 and 12 and that the user's back faces between panels 1 and 24.

The terms "left" and "right" and "forward" and "backward" are directions relative to the orientation of a person using the parachute. The person 26 closes the outlets 19 using the lines 27 identified by the identifiers.

Referring to Figure 3, if the user closes both the left-hand groups of outlets 19, air emerging from the other two groups of outlets 19 will drive the canopy 10 to the left. This drive is maximized by the fact that the direction of the exits of the outlets 19 is close to horizontal.

Referring next to Figure 4, right-hand drive is obtained by closing the right-hand groups of outlets 19. Air then emerges from the left-hand group of outlets 19 to drive the parachute to the right.

Referring next to Figure 5, by closing the two rearward groups of outlets 19, rearward drive can be obtained.

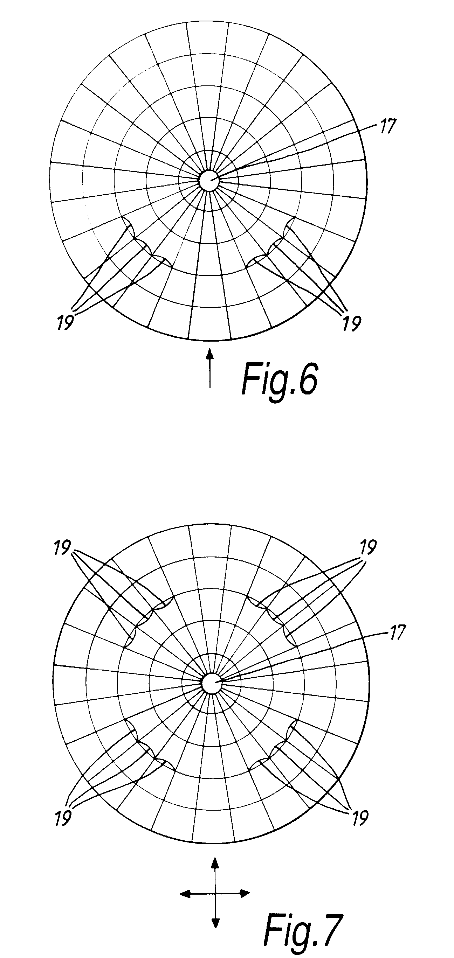

Referring next to Figure 6, forward drive is obtained by closing the forward two groups of outlets 19.

Referring to Figure 7, no positive drive is obtained when all the outlets 19 are open.

In this way, the parachute can be steered as required. In addition, the drive (see Figure 6) can be used to offset the prevailing wind thus allowing use in higher winds than would be the case in the absence of the outlets 19.

It will be appreciated that there are a large number of variations that can be made to the parachute described above with reference to the drawing. There need not be four groups of outlets 19, there could be three or two groups of outlets 19. Although the groups of outlets 19 are shown equi-angularly spaced around the canopy 10, the groups need not be equi-angularly spaced.

The parachute described above with reference to the drawings has three outlets 19 in each group. There could be only one outlet 19 or two, four or more outlets 19. There need not be the same number of outlets 19 in each group; there could be different numbers of outlets in each group. For example, there could be more outlets 19 in the rearward groups than in the forward groups.

The groups need not be orientated as shown relative to the person using the parachute. They could be orientated in any suitable way.

As shown, each outlet 19 directs air in a direction lying in a plane including the canopy axis. This need not be the case; the outlets 19 could be skewed so that air is directed in a direction at an angle to such a plane. There could be some skewed and some straight.

As shown in the accompanying drawings and described above, each outlet extends to the apex 16 of the associated gore. This need not be so. Each outlet could extend only part the way to the apex 16 with the gore 13 continuing to the apex 16.

There could be only one line to close a group of outlets simultaneously. The outlets need not be closed completely; they could be only partially closed.

Further, the drive control need not be used to steer the parachute in the sense of controlling its direction relative to a line of travel. An outlet or outlets 19 may be provided at the rear of the canopy on, or disposed about the intersection with the canopy of the vertical plane including the direction in which a person faces.

As a result of this, the opening and closing of the outlets 19 controls the drive of the parachute in the direction of travel of the parachute. This allows the forward drive of the canopy to be controlled.

Such outlets may be provided as an alternative or in addition to the outlets described above with reference to the drawings.

## Claims

1. A parachute comprising a conical canopy (10) including at least two outlets (19) for permitting the egress of air from the interior of the canopy (10) to the exterior when the canopy is inflated, the outlets (19) being separately selectively closable to at least reduce the flow of air therethrough and the outlets (19) being so positioned on the canopy (10) that such closing of an outlet (19) produces a driving force on the canopy (10) from the other outlet or outlets (19) to control the drive of the parachute.

2. A parachute according to claim 1 wherein the canopy (10) is formed from a plurality of connected gores (13), each outlet (19) being formed in a respective gore (13).

3. A parachute according to claim 2 wherein each outlet (19) is formed by an aperture (20) in the associated gore (13) and a panel (22) overlying the aperture (20), an end (24) of the panel (22) co-operating with the associated gore (13) to provide an exit for air from said outlet (19).

4. A parachute according to claim 3 wherein each aperture extends to the apex (16) of the associated gore (13), the panel (22) also extending to said apex with the exit being provided at an end of the panel (22) remote from the apex (16).

5. A parachute according to claim 3 or claim 4 wherein each aperture (20) is covered by netting (21).

6. A parachute according to any one of claims 3 to 5 wherein a line (27) is connected to the end of each panel (22) forming said exit, said line (27) being operable by a user of the parachute to at least reduce the flow of air therethrough.

7. A parachute according to any one of claims 1 to 6 wherein each aperture (19) can be completely closed.

8. A parachute according to any one of claims 1 to 7 wherein at least three outlets (19) are provided, said outlets being spaced equi-angularly around the canopy (10).

9. A parachute according to claim 8 wherein four outlets (19) are provided.

10. A parachute according to claim 9 and including a harness (12) for holding a user facing in a direction lying in a plane including the axis of the canopy (10), said plane intersecting the canopy (10) mid-way between adjacent pairs of outlets (19).

11. A parachute according to any one of claims 1 to 10 and including a harness (12) for holding a user in a direction lying in a plane including the axis of the canopy (10), an outlet (19) being provided at the intersection of said plane with the canopy (10) to allow control of forward drive of the canopy (10).

12. A parachute according to any one of claims 1 to 11 wherein each outlet (19) is one of a group of adjacent outlets (19).

13. A parachute according to claim 12 wherein there are three outlets (19) in each group.

14. A parachute according to claim 12 or claim 13 wherein the outlets (19) of each group are separately closable.

15. A parachute according to claim 12 or claim 13 wherein the outlets (19) of each group are closable together.

16. A parachute according to any one of claims 1 to 15 wherein each outlet (19) directs air from the canopy (10) in a direction lying in a plane including the canopy axis.

17. A parachute according to any one of claims 1 to 15 wherein each outlet (19) directs air from the canopy in a direction inclined to planes including the canopy axis.

18. A parachute according to any one of claims 1 to 17 wherein the canopy (10), when inflated has a circular cross-section in planes normal to the canopy axis, with a lower edge (14) and an apex (16), the depth of the canopy (10) being less than half the diameter of the canopy at the lower edge (14) of the canopy (10) so that the portion of the canopy (10) towards the apex (16) is flattened, said outlets (19) being formed in said flattened portion so that air is directed out of said outlets in a direction lying in or close to a plane normal to the canopy axis.

19. A parachute according to any one of claims 1 to 18 wherein the canopy (10) is made from an air impermeable material.

20. A parachute according to any one of claims 1 to 18 wherein the canopy (10) is made from semi air-permeable material.
